# EUROPEAN PATENT SPECIFICATION

(11) **EP 1 300 072 B1**
(45) Date of publication and mention of the grant of the patent: **30.03.2005**
(21) Application number: 02078989.7
(22) Date of filing: 27.09.2002
(51) Int. Cl.: A01K 5/02

(54) **A device for and a method of automatically supplying at least two sorts of feed to animals**
Vorrichtung und Verfahren zum automatischen Zuführen von mindestens zwei Futterarten für Tiere
Dispositif et procédé de distribution automatique d'au moins deux sortes de fourrage à des animaux

(30) Priority: 03.10.2001 NL 1019090
(43) Date of publication of application: 09.04.2003
(73) Proprietor: Lely Enterprises AG, 6300 ZUG (CH)
(72) Inventor: Voogd, Lucien Eliza Niels, 4143 HG Leerdam (NL); van den Berg, Karel, 2971 BR Bleskensgraaf (NL)
(74) Representative: Corten, Maurice Jean F.M.

(56) References cited:
- DE-A- 4 137 387
- GB-A- 2 155 301
- NL-C- 1 010 898

## Description

The invention relates to a device for automatically supplying at least two sorts of feed to animals according to the preamble of claim 1.

Such a device, also known as feed mixing device, is known from DE-A-4137387. In this known device, in dependence on the individual animal reporting at the feeding parlour, the amounts and the mixing ratios of the sorts of feed to be supplied are supplied to the individual animal in dependence on a control quantity determined from the weight and/or from a quantity approaching the weight.

It is an object of the invention to provide an improved device for automatically supplying feed to animals.

According to the invention, for that purpose a device for automatically supplying feed to animals of the above described type comprises the measures according to the characterizing part of claim 1. The invention is based on the insight that, although with the known device a sufficient amount of feed is offered to the animals, the feed intake of the animals is not optimal, just because the feed is mixed. Long research has revealed that animals, because of the uniform, possibly one-sided flavour of the mixed feed, do not consume an optimal amount of feed. Providing variation in the offered feed, by offering other sorts of feed, is only possible to a very limited extent. On the one hand this is caused by the fact that certain animal species only consume particular sorts of feed. On the other hand, because of the economic use of the animals, for example as dairy animals, animals for slaughter or animals for sports, the use of these other sorts of feed may lead to an economically less interesting or an on the whole uninteresting use of the animal. For example, the quality and/or the flavour of the milk produced or the meat produced may be influenced negatively by using other sorts of feed. Besides, in the case of animals for sports, the performance of the animal may be influenced negatively by using other sorts of feed. According to the invention there is provided variation in the offered feed in that the device is provided with a control device, said control device generating a control signal for controlling the device in such a way that, seen in time, at least one sort of feed is supplied to the feeding parlour at least substantially separately from the other sorts of feed, in order that substantially the at least one sort of feed is not present in the feeding parlour simultaneously with the other sorts of feed. Thus the at least one sort of feed is offered separately, i.e. non-mixed, and at the same time the order in which the sorts of feed are offered to the animal can be varied. This makes it more attractive for an animal to consume more feed, while the feed combination for obtaining the desired economic result needs not to be changed.

Although it is possible, seen in time, to supply only one of the sorts of feed separately to the feed trough, and to mix the remaining sorts of feed, it is preferred, for the purpose of providing a greater variation in offered feed, when the control signal controls the device in such a way that, seen in time, all sorts of feed are supplied to the feeding parlour at least substantially separately from each other, in order that substantially none of the sorts of feed is present in the feeding parlour simultaneously with another sort of feed. In this case all sorts of feed are offered substantially separately, i.e. non-mixed.

In an embodiment of a device according to the invention, the control signal controls the device in such a way that the order in which sorts of feed are supplied to the feeding parlour is arbitrary. This prevents the order in which the sorts of feed are supplied at least substantially separately to the feeding parlour from becoming a standard order, so that the order in which the sorts of feed are offered to the animals always varies.

It has been found inter alia that certain animals have a strong preference for a particular sort of feed and only eat this feed, which is the tastiest for them. Further there appear to be various other circumstances influencing the feed intake. In order to ensure that such animals consume all the ingredients required for economic performance and for maintenance of their health, it is preferred when the device is provided with an animal identification device for identifying an animal, and when the control device is provided with a computer having a memory, said memory containing per animal data in relation to sorts of feed to be supplied, the computer generating the control signal with the aid of data from the animal identification device and data from the memory, the control signal controlling the device in such a way that the order in which sorts of feed are supplied to the feeding parlour depends on said data.

In particular the data in the memory contain per animal data in relation to the feed intake in dependence on the environmental conditions, such as atmospheric condition and accommodation conditions. For example the feed intake appears to depend inter alia on air humidity, temperature, atmospheric pressure, wind speed, extent of freedom of movement, amount of light in the accommodation and the like. By adapting the order of sorts of feed to be offered to these circumstances, it is possible to ensure a desired feed intake. The device preferably comprises atmospheric condition measuring means for measuring the atmospheric conditions and for issuing an atmosphere indication signal to the control device, so that it is possible to take changing atmospheric conditions, for example changing temperature, humidity, atmospheric pressure, wind speed and the like, automatically into account.

Long research has revealed that the order of sorts of feed offered by which an optimal feed intake is obtained depends on the point of time of the day, so that in an embodiment of a device according to the invention, the data in the memory contain per animal data in relation to the feed intake in dependence on the point of time of the day. In particular the device comprises a clock for measuring the point of time of the day and for issuing a time signal to the control device, so that on determining the order of sorts of feed to be offered the point of time of the day can automatically be taken into account. It has been found for example that the feed intake behaviour can vary per animal in the morning, in the afternoon and in the evening.

Long research has revealed that the order of sorts of feed offered by which an optimal feed intake is obtained depends on the period of the year, so that in an embodiment of a device according to the invention, the data in the memory contain per animal data in relation to the feed intake in dependence on the period of the year. In particular the device comprises a clock for measuring the period of the year and for issuing a year period signal to the control device, so that on determining the order of sorts of feed to be offered the period of the year can automatically be taken into account. It has been found for example that in the winter animals prefer drier sorts of feed.

It has been found that with dairy animals the order of sorts of feed offered by which an optimal feed intake is obtained depends on the lactation period of the dairy animal, so that in an embodiment of a device according to the invention, the data in the memory contain per animal data in relation to the feed intake in dependence on the lactation period. That the sorts of feed offered (amount and ratio) can be adjusted in dependence on the lactation period is known per se, however it has been found that also the order in which the sorts of feed are offered can promote the desired feed intake in the course of the lactation period.

Long research has revealed that the order of sorts of feed offered by which an optimal feed intake is obtained depends on the condition score, so that in an embodiment of a device according to the invention, the data in the memory contain per animal data in relation to the feed intake in dependence on the condition score of the animal. The device comprises in particular means for measuring the condition score of an animal and for issuing a condition score signal to the control device, so that the condition score of the animal can automatically be taken into account. When for example the condition score indicates that the animal has a deviating value in comparison with its standard condition score, the order of sorts of feed to be offered can ensure a better consumption by the animal of just the required sorts of feed.

Long research has revealed that the order of sorts of feed offered by which a feed intake is obtained which is optimal for setting dry depends on the point of time during the course of setting dry, so that in an embodiment of a device according to the invention, the data in the memory contain per animal data in relation to the feed intake pattern of the animal during setting dry. The device comprises in particular a clock for measuring the momentary point of time in the course of setting dry the relevant animal, and for issuing a signal indicating the point of time of setting dry to the control signal, so that on determining the order of sorts of feed to be offered the point of time during the course of setting dry can automatically be taken into account.

Long research has revealed that the order of sorts of feed offered by which an optimal feed intake is obtained depends on the eating rate of the animal, so that in an embodiment of a device according to the invention, the data in the memory contain per animal data in relation to the eating rate per sort of feed. The device is in particular provided with means for determining per animal the eating rate per sort of feed, and for issuing an eating rate signal to the control device, so that on determining the order of sorts of feed to be offered the eating rate can be taken into account. The eating rate can be an indication of the extent to which the animal finds a certain sort of feed attractive or not. It has been found that, when the feed in question is offered as the last sort of feed, also all the other previously offered sorts of feed are consumed by the animal.

It is advantageous when the data in the memory contain per dairy animal data in relation to the milk yield. This makes it possible to optimise the milk yield by determining a suitable order of sorts of feed to be offered. The relation between the energy contents of the feed and the milk yield is known per se, but the invention is based on the insight that the order in offering the sorts of feed can ensure that said amount of energy is actually being consumed.

It is further advantageous when the data in the memory contain per animal data in relation to the amount of energy and/or protein and/or fat and/or minerals and/or amino acids to be offered, and when the data in the memory contain per sort of feed data in relation to the amount of energy and/or protein and/or fat and/or minerals and/or amino acids per unit of weight. This makes it possible to ensure that the total of feed to be offered to an animal contains the required ingredients for that animal, a sufficient variety in the order of sorts of feed to be offered still being possible. This can in particular be combined with data in the memory containing per animal milk data in relation to amounts of ingredients, such as fats, proteins, sugars, and the like, in the milk obtained from that animal. Such data can be obtained by measurement, so that after a milking run the order of sorts of feed to be offered can be adapted to obtain the correct amount of ingredients (for example fat) in the milk.

For the purpose of inputting the relevant data, the computer is provided with an inputting device for inputting data into the memory.

Because some of the above-mentioned data are not known to a farmer, it is advantageous when the control device is suitable for generating itself data for the memory. For example it is possible that the control device changes the order of feed to be offered at a particular ambient temperature, and determines each time at each order chosen the intake by the animal. Thus it is possible that the control device determines itself the optimal order at a particular ambient temperature.

Because an animal develops continuously, it is advantageous when the data are updated continuously, so that on determining the order of sorts of feed to be offered a developing animal can be taken into account.

For the purpose of adding for certain animals particular additives, such as medicines, it is advantageous when the device is provided with an additive device for adding additives to the feeding parlour.

In a preferred embodiment of a device according to the invention, the device is provided with means for measuring the amount of a sort of feed consumed by an animal, and for issuing a consumed amount signal to the control device. When the device is provided with a detection device for determining the amount of feed in the feed trough at a point of time after a supply of an amount of feed and for issuing a signal in dependence on the amount-determination result, it is possible to measure for example the eating rate of an animal per sort of feed. The detection device comprises in particular a weighing device for weighing the amount of feed in the feeding parlour, although other means such as picture recognition equipment can be used as well.

When at least two sorts of feed are supplied successively to the feeding parlour, the control device preferably permits the supply of a sort of feed after it has been determined that a particular amount of the previous sort of feed has been consumed by an animal, preferably that the previous sort of feed has completely been consumed by the animal. In this manner it can be ensured that an animal does not wait without eating until the feed attractive for him is offered. Besides the preferred criterion of complete consumption of a sort of feed, also an (adjustable) threshold value can be taken. For that purpose, in an embodiment of a device according to the invention, the control device is provided with a comparing device for comparing the consumed amount signal with a threshold value and for generating a comparison result signal, the control signal controlling the device in conjunction with the comparison result signal in such a way that the order and/or amount of sorts of feed possibly to be supplied further are/is adapted.

In order to prevent that an animal keeps waiting at a feeding parlour after having been fed, in an embodiment of a device according to the invention, the feeding parlour is constituted by a feed trough capable of being closed by a closing means, the control device also being suitable for controlling the operation of the closing means.

A device according to the invention is inter alia applicable in a milking box with a milking robot. However, the invention is in particular advantageous when the device is constituted by a feeding column, in which situation several animals can make use of the device at the same time. To that end the feeding column is provided in a manner known per se with a framework located around a central axis, to which framework a number of feed troughs and hoppers have been fitted.

Although the data in relation to the sort of feed respectively the associated hoppers can be inputted, it is preferred when the device is provided with feed determining means for determining the sort of feed in a hopper. Such feed determining means may comprise for example an olfactometer, a colour meter or picture recognition equipment.

An advantageous embodiment of a device according to the invention is characterized in that the device is provided with a receptacle, the conveying means comprising a first conveyor for conveying an amount of feed from the hopper to the receptacle and a second conveyor for conveying the amount of feed from the receptacle to the feeding parlour. The receptacle is preferably provided with a weighing device for measuring the feed present in the receptacle. This makes it possible to determine the amount of feed to be supplied to the feeding parlour.

Although the feed can be taken out of the receptacle by means of a separate taking-out device, for the sake of simplicity of the construction it is advantageous when there is not used a separate device for taking out. There may be used a tiltable receptacle, feed falling from said receptacle after the latter has been tilted. However, for improving the hygienic use of the device, it is preferred when the receptacle has a bottom which is designed to be opened. The receptacle is preferably provided with a control device for controlling the opening of the bottom. It has appeared to be particularly suitable when the second conveyor is constituted by a tube-shaped chute respectively a channel-shaped chute.

The invention also relates to a method of automatically supplying at least two sorts of feed to animals, such as cows, characterized in that the method comprises the step of supplying the at least two sorts of feed at least substantially successively to the animals, in order that the at least one sort of feed is not present in the feeding parlour simultaneously with the other sorts of feed. In a preferred embodiment the method comprises the step of supplying all sorts of feed at least substantially successively to the animals, in order that substantially none of the sorts of feed is present in the feeding parlour simultaneously with another sort of feed. Preferably the sorts of feed are supplied to the animals at least substantially successively in an arbitrary order. Alternatively or additionally the method comprises the step of identifying an animal, the step of storing in a memory of a computer data in relation to sorts of feed to be supplied per animal, and the step of supplying sorts of feed to the animals in an order in dependence on said data. Alternatively or additionally the atmospheric conditions are measured. Alternatively or additionally the point of time of the day, respectively the date is measured. Alternatively or additionally the condition score of the animal is measured. Alternatively or additionally the eating rate per sort of feed is determined per animal. Alternatively or additionally the milk values in relation to amounts of ingredients, such as fats, proteins, sugars, and the like in the milk obtained from an animal are measured per animal. Alternatively or additionally the amount of a sort of feed consumed by an animal is measured. Alternatively or additionally the amount of feed supplied to the animals is weighed. Alternatively or additionally a next sort of feed is supplied when the previous sort of feed has completely been consumed by the animal.

The invention will now be explained in further detail with reference to an embodiment shown in the drawing, in which:
Figure 1 is a schematic cross-sectional view of an embodiment, in the form of a feeding column, of a device according to the invention;
Figure 2 is a schematic side view of an embodiment of a device according to the invention, integrated in a milking box;
Figure 3 shows a first embodiment of means for measuring the amount of a sort of feed consumed by an animal in a device according to the invention;
Figure 4 shows a second embodiment of means for measuring the amount of a sort of feed consumed by an animal in a device according to the invention;
Figure 5 shows a third embodiment of means for measuring the amount of a sort of feed consumed by an animal in a device according to the invention;
Figure 6 shows a fourth embodiment of means for measuring the amount of a sort of feed consumed by an animal in a device according to the invention, and
Figure 7 shows a fifth embodiment of means for measuring the amount of a sort of feed consumed by an animal in a device according to the invention.

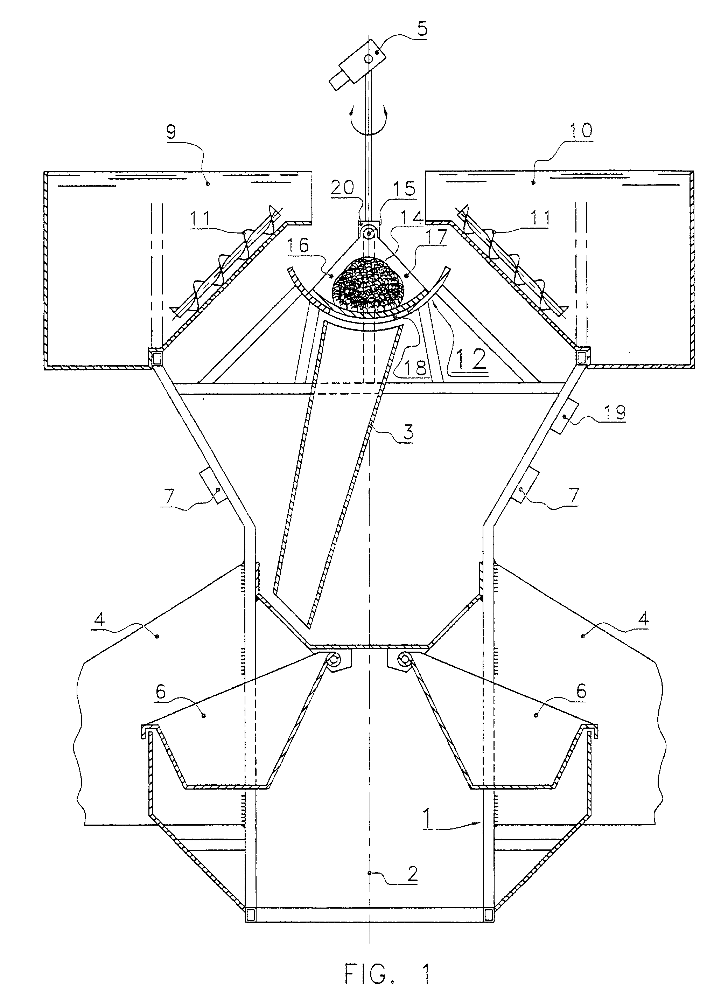

In the embodiment depicted in Figure 1 a framework 1, having a substantially circular circumference, is disposed around a central axis 2. A number of hoppers 9, 10 (two of which shown in the drawing) are located at the upper side of the framework 1. For the installation of the hoppers 9, 10 there are made not further shown provisions on the framework 1. Each hopper 9, 10 contains a particular sort of feed.

The framework 1 is provided with partitions 4 which are detachably disposed on the framework 1.

Feed troughs 6 for the animals are disposed in a circular arrangement in the lower part of the device. By means of the geometry of the device, in the embodiment shown constituted by a feeding column, it is achieved that the construction occupies little space, while the accessibility of the feeding column to the animals is optimal from all directions.

The feeding column further comprises conveying means comprising a first conveyor 11 and a second conveyor 3 for conveying feed from the hopper 9, respectively 10 to the relevant feed trough 6. The feed can be conveyed directly from the hoppers 9, 10 to the feed troughs 6. In the embodiment shown there is provided a receptacle 12, for example centrally located, receiving an amount of feed conveyed by the first conveyor 11 from the hopper 9, 10 to the receptacle 12. As a first conveyor 11 an auger, gripper, conveyor belt, or any other construction known per se for conveying feed, can be used.

A second conveyor 3, preferably constituted by a tube-shaped chute respectively a channel-shaped chute, is suitable for conveying the amount of feed from the receptacle 12 to the relevant feed trough 6. For conveying the feed to the relevant feed trough 6 it is advantageous when the tube-shaped chute 3 is rotatably mounted in the feeding column. The tube-shaped chute respectively the channel-shaped chute is preferably made of stainless steel.

The device is provided with a control device 19. Said control device 19 controls the components of the device in such a way that, seen in time, one sort of feed is supplied separately or preferably all sorts of feed are supplied separately from each other to the feed trough 6. Thus it is realised that one sort of feed is offered to the animal substantially separately, i.e. non-mixed. In this situation by 'substantially' is not meant that another sort of feed is not present at all besides the one sort of feed in the feed trough, it being possible that there is still a small (remaining) amount of a (previously supplied) other sort of feed present.

Hereinafter the order in which the sorts of feed are supplied to the feed troughs 6 will be set out in further detail.

The device may be provided with feed determining means 5 for determining the sort of feed in a hopper 9, 10. Such feed determining means may comprise for example an olfactometer, a colour meter or picture recognition equipment (such as described for example in U.S. patent 4,843,561).

For the purpose of conveying an amount of a sort of feed 14 to the tube-shaped chute 3 the receptacle 12 has a bottom which is designed to be opened. In the embodiment shown this is realised in that the bottom of the receptacle 12 has two halves 16 and 17 which are pivotable about an axis 15. When the halves 16, 17 move away from each other, there is thus created a chute aperture 18 through which the amount of sort of feed 14 falls into the tube-shaped chute 3.

The control device 19, although another control device may serve as well for that purpose, controls the opening of the bottom of the receptacle 12. Said control device 19 preferably also controls the order of functioning of the first and second conveyors 11 respectively 3, so that the supply of the sorts of feed can take place quickly.

There are provided identification means 7 for identifying an individual animal. In the embodiment shown the identification means 7 are disposed on the framework 1, but it will be obvious that the identification means can also be disposed at other places, such as for example the feed troughs 6. With the aid of the identification means 7 the identity of an animal present at a feed trough 6 is established automatically. With the aid of data stored in the memory of for example the control device 19, the amounts of sorts of feed intended for that animal can then be supplied, as will be elucidated hereinafter. With the aid of a weighing device 20 known per se the amount conveyed to the receptacle 12 by the first conveyor 11 can then be checked. The control device 19 further controls, with the aid of data from the animal identification means 7, the movement of the tube-shaped chute 3 so that the latter is located just over the correct feed trough 6. The control device 19 further controls the drive of the conveyors 11.

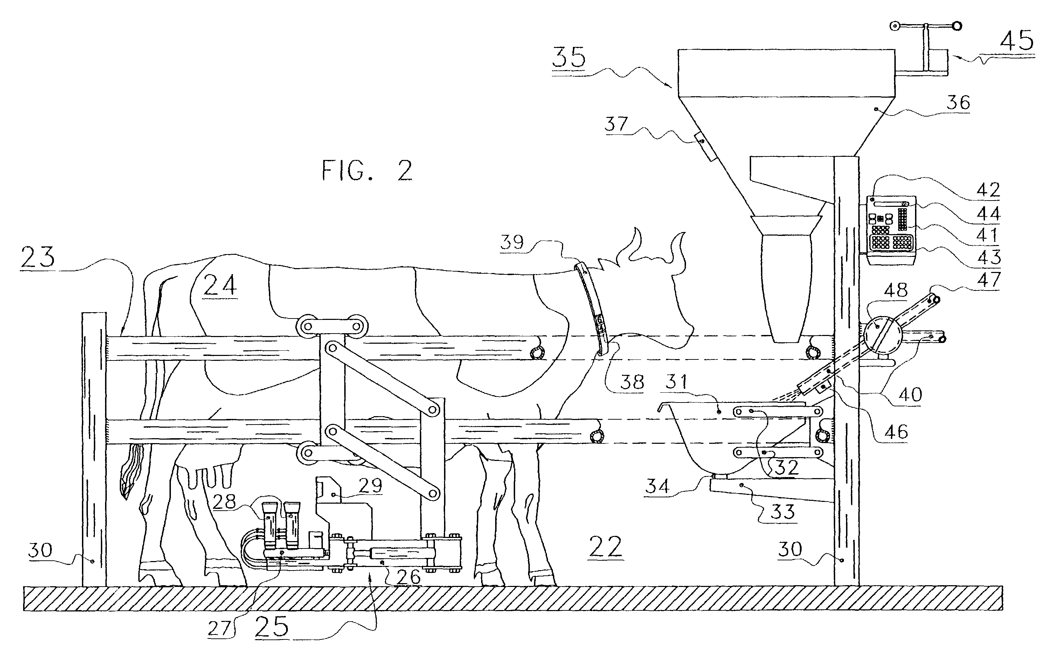

Figure 2 is a side view of a milking box 22 comprising a fencing 23 disposed near the circumference of a cow 24 during her stay in the milking box 22. On one side of the milking box 22 there is disposed a milking robot 25. The milking robot 25 comprises for example a robot arm 26 having at its end teat cups 28 supported by a carrier 27. On the robot arm 26 near the teat cups 28 there is further disposed a sensor 29 with the aid of which the position of the teats of a cow to be milked can be determined.

Near the front side of a milking box 22 a feed trough 31 is fastened to a post 30. In the embodiment shown the feed trough 31 is connected with a post 30 by means of a parallelogram hinge construction 32. The feed trough 31 is supported at its lower side by a supporting beam 33. Between the supporting beam 33 and the lower side of the feed trough 31 there is further disposed a measuring device 34 by means of which the weight of the feed trough 31 with contents can be determined. In the present embodiment the measuring device 34 comprises a piezo-element. It will be obvious that the invention is not limited to this specific manner in which the contents of the feed trough can be measured, and hereinafter some alternative ways of determining the weight of the feed trough with contents will be described.

Over the feed trough 31 there is fitted to the post 30 a feed metering device 35 comprising a number of hoppers (not shown in the drawing), each for containing one sort of feed, and a tube-shaped chute. The feed metering device 35 comprises a reservoir 36 surrounding the hoppers for the sorts of feed. Against the outer wall of the reservoir 36 there is disposed a receiver 37 constituting part of (non-shown) identification means. The receiver 37 can receive the signals from a transmitter 38 disposed for example on a collar 39 around the neck of the cow 24. It will be obvious that different sorts of identification means are applicable in the invention and that the invention is not limited to one sort of identification means. The receiver and the transmitter may further be disposed at different places. For example the receiver may be disposed on the feed trough 31 and the transmitter may be implanted in the cow.

Near the upper side of the feed trough 31 there is further fitted to the post 30 a liquid supplying device 40, for example a sprayer, with the aid of which an amount of liquid, for example water, or a viscous liquid, such as syrup or treacle, can be added to the feed present in the feed trough 31.

The device operates as follows:

After the cow 24 has entered the milking box 22 and the transmitter 38 has come into the receiving range of the receiver 37, the cow 24 is automatically identified by the identification means. Per cow data in relation to the sorts of feed and the amount thereof offered to a relevant cow per feeding run are stored in a manner known per se in a memory 41 of a computer 42.

When a cow 24 has been identified, the identification means send a signal to the computer 42 which, with the aid of the data stored in the memory 41, controls the feed metering device 35 in such a way that an order of sorts of feed with the amount associated therewith belonging to the cow 24 is supplied.

Besides offering the sorts of feed in a specific order or on the contrary arbitrarily, as will be explained hereinafter in further detail, the amount of feed consumed by a cow can be optimised further by adding an amount of liquid to a sort of feed by means of the liquid supplying device 40. What should be the amount of liquid to be added per cow per sort of feed is determined per cow with the aid of data in the memory 41 of the computer 42. Said data contain per cow a relation between the intake of the sort of feed and the added amount of liquid for obtaining for example a desired milk production. Thus, after a cow 24 has been identified, the computer 42 issues a signal to the liquid supplying device 40 for supplying the relevant amount of liquid. For that purpose the computer 42 uses the relevant data from the memory 41.

For the first use of the device according to the invention these data can be inputted into the memory 41 by making use of inputting means, such as a keyboard 43. This can be done by a farmer who inputs values per cow and per sort of feed according to his experience. For facilitating the input and for checking the functioning of the device during the use thereof, the computer 42 comprises a display screen 44.

The device preferably comprises measuring means 45 for measuring the atmospheric conditions, such as temperature, air humidity, atmospheric pressure, wind speed and the like. The data in the memory 41 can contain per cow a relation between the amount of liquid to be added per sort of feed and the environmental conditions, which relation leads to a desired feed intake.

Thus in the embodiment described, after a visit of a cow to the milking box the following data are stored in the memory: the amount consumed per sort of feed, the amount of liquid added per sort of feed, the temperature, the air humidity, the atmospheric pressure, the wind speed, and the milk yield. When a cow has consumed all the feed supplied, said data are processed by the computer in the memory, so that at a next visit of the cow under the same circumstances the same amounts of liquid can be added to the sorts of feed.

When the cow has not consumed all the feed, at the next visit of the cow to the milking box it is possible to change the amount of liquid which is added to the sorts of feed or the order in which the sorts of feed are offered themselves. For changing the amount of liquid to be added different approaches can be made. For example, the amount of liquid to be added can be increased at the next visit by 5% (another increase, or even decrease, is also possible, of course), after which the amount of feed consumed is measured. Accordingly, the amount of liquid is changed automatically per visit of the cow to the milking box until the cow has eaten up the entire amount of the sort of feed supplied. In the latter situation the data are recorded by the computer in the memory as standard values. Otherwise, they are stored temporarily, for providing the possibility of determining the standard values. The control device comprising the computer can be programmed such that certain data are given priority for determining the amount of liquid to be added. An example of a priority order is: amount consumed of the sort of feed, milk yield, lactation period, air humidity, temperature, atmospheric pressure, wind speed. Of course, another order, in dependence on the wishes of the farmer, is possible as well. Thus there is provided an iterative way of determining the amount of liquid to be added for obtaining the optimal feed intake.

The liquid supplying device 40 may be provided with a heating device or cooling device 46 for the liquid, bringing the liquid at a temperature suitable for optimal feed intake and possibly making the viscous liquid better processable. The operation of the heating/cooling device 46 can also be controlled by the computer 42 with the aid of data from the identification means and the data from the memory 41.

The device is provided with an additive device 47 for adding additives to the feed. Said additive device can be controlled by the computer 42 which controls for example a valve 48 in dependence on data from the identification means and data from the memory 41. As a result thereof for each cow individually certain additives, such as medicines, vitamins, fish oil, salts, minerals, and the like, can be added to the feed, preferably to the sort of feed which is best consumed. by the cow.

By means of the measuring device 34 it is further determined how much feed a relevant cow has consumed during the feeding time. The amount of the sort of feed and the amount of liquid added can also be determined separately. These data can be used for continuously updating the data in the memory and possibly adapting them to a changing eating behaviour of the cow.

As mentioned in the foregoing, some alternatives for determining the weight of a feed trough, in particular the amount of feed present therein, will now be described.

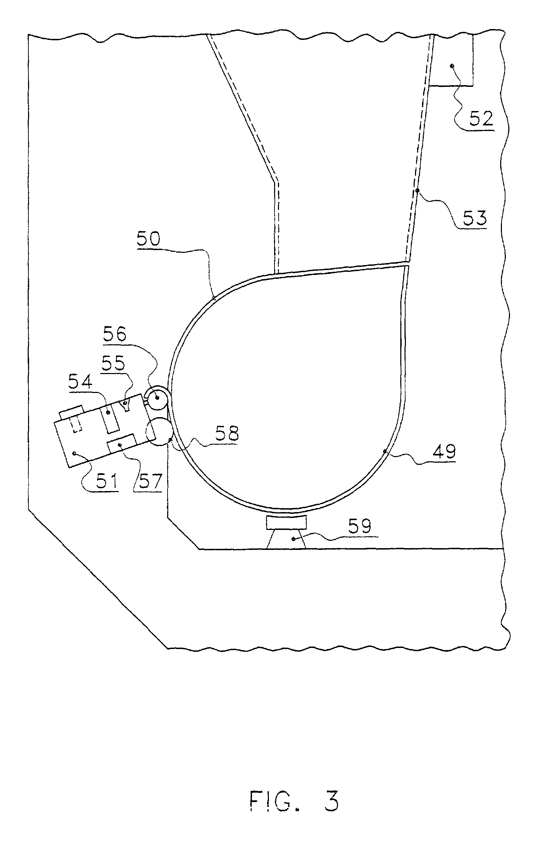

Figure 3 shows schematically a first embodiment of a feed trough 49 for containing feed. An entrance opening 50 gives an animal, for example but not exclusively a cow, access to the feed trough 49. An identification means known per se, i.e. an animal identification device 51, is disposed near the feed trough 49 and recognises a particular animal approaching the feed trough 49 and wishing to make use of it. With the aid of data from the animal identification device 51, a control device 52 supplies an amount of a particular sort of feed to the feed trough 49, the amount of said sort of feed falling into the feed trough 49 via for example a tube-shaped chute 53.

By weighing the amount of the sort of feed present in the feed trough, it can be determined how much of a particular sort of feed is consumed by a particular animal, and also whether remaining feed is present in the feed trough. The means for weighing the feed present in the feed trough are preferably connected with the control device for supplying, with the aid of data both from the animal identification device and the means for weighing, an amount of a sort of feed to the feed trough, while the amount of a sort of feed left by the previous animal can thus be taken into account.

In Figure 3 the means for weighing the feed present in the feed trough 49 comprise a feed trough 49 which is pivotable about a pivot axis 56. The degree of pivoting is determined by the weight of the feed present in the feed trough 49. There is provided a device 57 for determining the degree of pivoting of the feed trough 49, and for deducing therefrom the weight of the feed present in the feed trough 49. The device 57 for determining the degree of pivoting of the feed trough 49 comprises a measuring roll 58 being in contact with the feed trough. From the degree of rotation of the measuring roll 58 the degree of pivoting and thus the amount of feed in the feed trough 49 can be determined.

Because of the fact that the device 57, 58 for determining the degree of pivoting of the feed trough 49 is integrated in the animal identification device 51, there is obtained a compact construction.

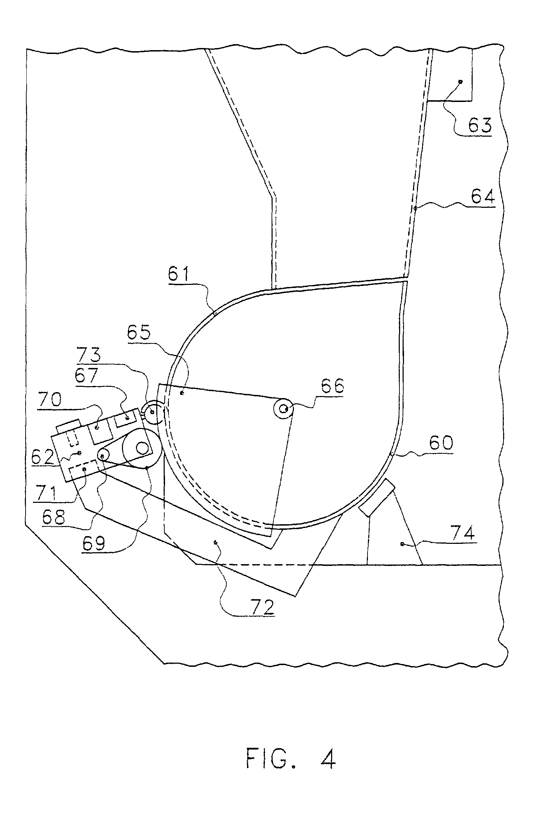

Alternatively or additionally, as shown in Figure 4, the pivoting-determination device 70 for determining the degree of pivoting of the feed trough 60, and for deducing therefrom the weight of the feed present in the feed trough 60, may comprise a dynamometer 71. In the embodiment shown, the feed trough 60 bears on the dynamometer 71 via a supporting arm 72. The feed trough 60 then pivots about a pivot axis 73. The dynamometer 71 is preferably included in the animal identification device 62.

In the embodiments shown in Figures 3 and 4, even small differences in weight can be measured, because of the fact that the pivot axis 56, 73 and the measuring roll 58 respectively the dynamometer 71 are located at a small distance from each other.

For preventing in undesired cases of malfunction, for example when the animal pushes the feed trough downwards with force, the measuring roll, the dynamometer or the like from being damaged, in both embodiments there may be provided a safety support cam 59 (Figure 3) respectively 74 (Figure 4) for supporting the feed trough 49; 60.

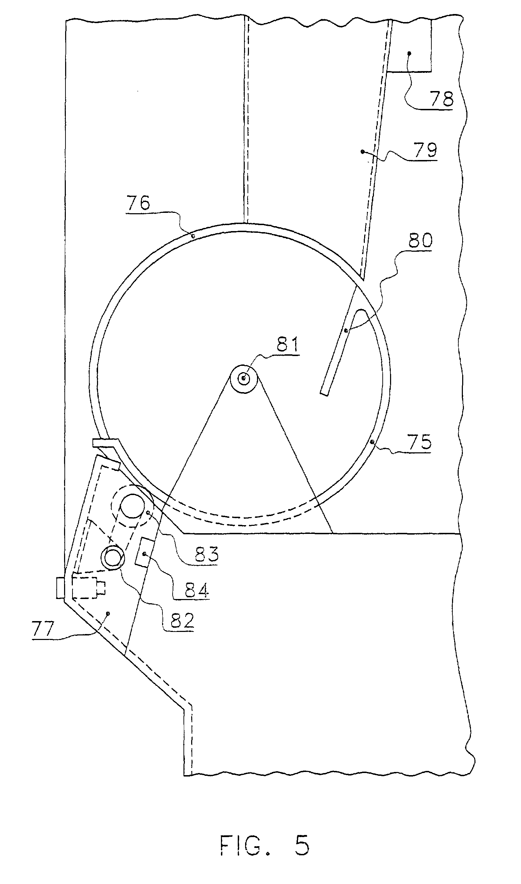

In the third embodiment, as shown schematically in Figure 5, the means for weighing the feed present in the feed unit comprise a movable feed trough 75. The feed trough 75 is moved in a reciprocating manner by the motor 82 by which the roll 83 is driven. As a result of this movement there is created a torque whose magnitude is determined by a device 84 for measuring the magnitude of the torque. From the torque determined the device 84 deduces the weight of the amount of a sort of feed present in the feed trough. The exact correlation between torque and amount of feed can previously be determined by simple calibration tests.

The embodiment according to Figure 5 has a compact construction because of the fact that the motor 82 for moving the feed trough 75, and the device 84 for measuring the magnitude of the torque during moving and for deducing the weight of the amount of the sort of feed present in the feed trough 75 from the measured magnitude of the torque, are integrated in the animal identification device 77.

The feed trough may be provided with means for holding back, with the aid of data from the animal identification device, an animal wishing to make use of the feed trough at an undesired point of time, or preventing that animal from making further use of the feed trough (for example for the remaining sorts of feed) or making further use of the feed trough impossible for that animal, with the aid of data from the animal identification device. As a result thereof it is possible to deter, in a simple, efficient and cheap manner, animals which are not eligible to be fed from putting their heads into the feed trough, and to teach an animal first to eat up the sort of feed present in the feed trough before another sort of feed is offered.

In the first embodiment shown in Figure 3, the means for holding back an animal comprise a loudspeaker 55 for issuing an animal-deterring sound. Alternatively or additionally the means for holding back an animal may comprise a lighting device 54 for producing an animal-deterring light. In particular when several feed troughs are juxtaposed, the use of deterring light is desirable, because this light can be focussed such that it only produces an effect on one particular feed trough.

In the second embodiment according to Figure 4, the means for holding back an animal comprise a closing means 65 which is movable across the entrance opening 61. When the closing means 65 is moved across the entrance opening 61, the contents of the feed trough 60 can be made inaccessible to a particular animal. In the embodiment shown the closing means 65 is constituted by a vessel-shaped element capable of rotating about an axis 66. Said axis 66 may be constituted by a motor-driven axis, said motor being controlled with the aid of data from the animal identification device 62.

Additionally there may be provided a voltage supplying device 67 for supplying an animal-deterring electric tension to the closing means 65. Animals approaching the feed trough 60 undesirably often make contact with the feed trough 60. They will in particular touch the closing means 65 with their noses. By connecting especially those components of the feed trough that are regularly touched by animals with the voltage supplying device 67, it is possible to deter a particular animal very locally. Accordingly, such a voltage supplying device 67 can also be used per se independently of a closing means.

The second embodiment also comprises a control device 63 and a tube-shaped chute 64 for the feed.

The devices described can be designed extremely compactly when the means for holding back an animal are integrated in the animal identification device. Alternatively the means for holding back an animal may be separate means.

In the third embodiment according to Figure 5, the closing means is constituted by the feed trough 75 itself which is designed movably. In the shown situation the feed trough 75 is disposed so as to be rotatable about an axis 81, which axis 81 may be constituted by a motor-driven axis, said motor being controlled by the animal identification device.

In order to prevent that, in the position in which the feed trough 75 closes the entrance opening 76, feed falls from the feed trough 75, the feed trough 75 is provided with a wall portion 80 for catching remaining feed. Said wall portion 80 can also act as a feed guiding means for feed supplied through the tube-shaped chute 79 to the feed trough 75.

As described, in the second and third embodiment there is provided a simple but reliable construction in that the closing means rotates about an axis, the closing means being driven by an animal identification device controlled by the motor. For the purpose of providing, besides a simple but reliable construction also a compact construction, a roll 69 respectively 83 is driven by a motor 68 respectively 82, said roll 69, 83 being in contact with the closing means 65 respectively 75. In the third embodiment the feed trough 75 thus bears on the animal identification device 77 via the roll 83.

Although for the roll 83 a separate torque roll can be used, it is preferred when the roll 83 performs both the function of driving the closing means, in this case the feed trough 75 itself, and the function of torque roll respectively measuring roll. Of course, in the alternative case in which the feed trough 75 is moved by the axis 81 driven by a motor, the torque can also be measured via that motor.

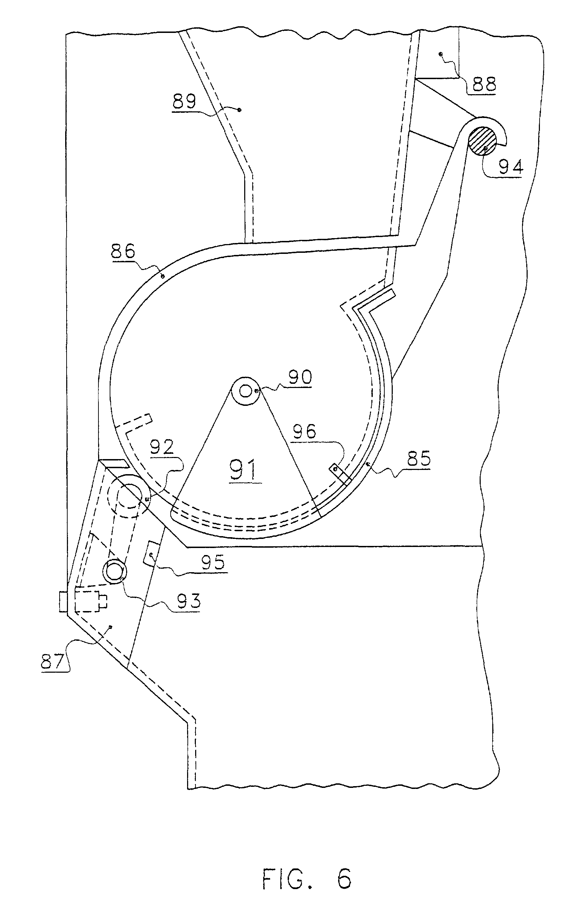

The fourth embodiment, as shown in Figure 6, comprises both means for holding back an animal wishing to make use of the feed trough 85 with the aid of data from the animal identification device 87, and means for weighing the feed present in the feed trough 85.

The means for holding back are constituted by a separate closing means 91 which is rotatable about an axis 90. The closing means 91 is set in rotation by a roll 92, capable of coming into contact with the closing means 91, and is driven by a motor 93 which is controlled by the animal identification device 87.

In this embodiment the weighing means are constituted by a feed trough 85 which is rotatable about an axis 94. The feed unit 85 can be brought into contact with the roll 92, and is subject to a reciprocating movement by correct operation of the motor 93 by which the roll 92 is driven. By the movement of the feed trough 85 there is generated a torque which can be measured by the torque measuring device 95.

In the situation shown in Figure 6 the roll 92 makes contact with the feed trough 85 and the latter can be set in motion for determining the amount of sort of feed present in the feed trough 85. After an animal has consumed the sort of feed, the amount of remaining sort of feed can be determined by torque measurement. Then the roll 92 is controlled by the motor 93 in such a way that it partially covers the entrance opening 86. A catching device 96 on the feed trough 85 takes along the closing means 91 until the latter comes into contact with the roll 92. Then the roll 92 controls the closing means 91 in such a way that it covers the entire entrance opening 86. As a result of the fact that the feed trough 85 is no longer in contact with the roll 92, the feed trough 85 falls back to the starting position in which a next sort of feed can possibly be supplied via the tube-shaped chute or channel-shaped chute 89.

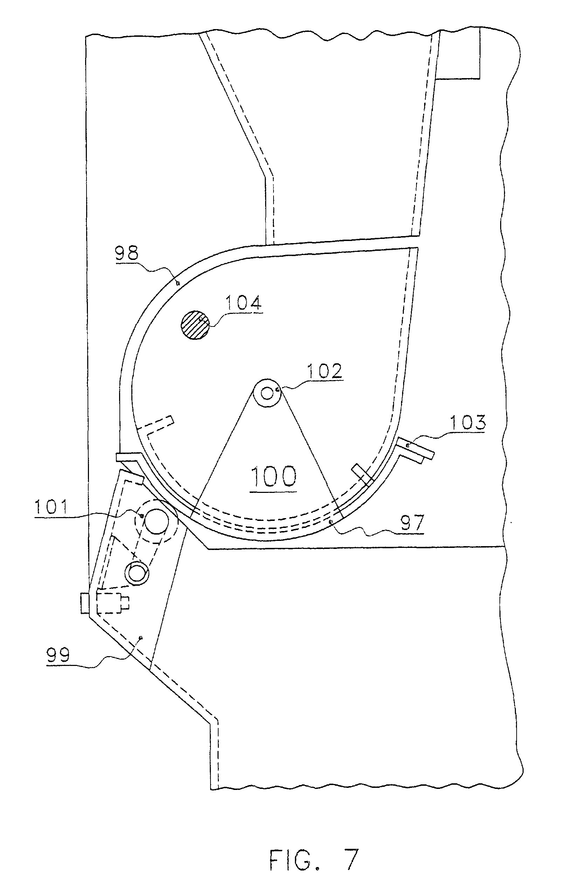

The fifth embodiment according to Figure 7 differs from that of Figure 6 by the location of the pivot axis 104 about which the feed trough 97 rotates. The pivot axis 104 is disposed close to the roll 101 for driving the feed trough 97 and measuring the torque, for measuring very small differences in amount of feed. There is also provided a stop 103 for preventing superfluous movement of the feed trough 97. The closing means 100 for closing the entrance opening 98 pivots about the axis 102.

The invention will be elucidated hereinafter with reference to a feed ration to be offered to a cow, which ration may be composed of the following four sorts of feed: concentrate, ensilaged grass, maize and brewer's grains. However, it will be obvious that other sorts of feed can be added and/or certain sorts of feed can be replaced by other sorts of feed. Adding a certain amount of liquid has already been described above and will not be described again.

Until now the four sorts of feed were supplied to the feed trough together or as a mixture, and the variation in offered feed was obtained by adapting the amount per sort of feed and/or the mutual ratio of the sorts of feed. According to the invention there is provided variation in the feed offered in that the control device 19, 42, 52, 63, 78, 88 controls the device in such a way that one sort of feed, seen in time, is supplied separately to the relevant feed trough 6, 31, 49, 60, 75, 85, 97, in other words one sort of feed is not supplied to the feed trough as a mixed one. Thus the order in which the sorts of feed are offered to the cow can be varied. For example the order may be: concentrate, ensilaged grass, and a mixture of maize and brewer's grains, but may also be: ensilaged grass, a mixture of maize and concentrate, and separately brewer's grains. Besides, seen in time, all sorts of feed can also be supplied separately, of course. It will be obvious that the amount per sort of feed is also controlled by the control device.

The control signal issued by the control device can control the device in such a way that, seen in time, the order in which sorts of feed are supplied to the feed trough separately from each other is arbitrary, so that each time when the cow arrives at the feed trough it is a surprise which sort of feed is supplied first.

However, the order can also be determined in dependence on the preference of the relevant cow, respectively in dependence on the environmental conditions, respectively in dependence on the desired economic results.

It has been found for example that one cow prefers brewer's grains to other sorts of feed, whereas another cow prefers concentrate and does not find brewer's grains tasty at all. The invention may be advantageous to prevent that the latter cow, just because brewer's grains is present in the offered feed, consumes less than desirable. For example, in that situation, when brewer's grains does not contain a nutritive ingredient that the other sorts of feed do contain, brewer's grains is not offered to that cow. When that cow needs an ingredient that is only present in brewer's grains, the control device is capable of controlling the relevant components in such a way that brewer's grains is offered as the first sort of feed. At this point of time, before the cow begins to eat, she has the most appetite and will earlier be inclined still to consume her portion. This can be stimulated in particular in that the control device offers, after the brewer's grains, the sort of feed which that cow finds the tastiest one. Such a control by the control device can take place because of the fact that such data are stored in the memory of the computer.

It has further been found that in humid circumstances cows prefer dry ensilaged grass and find the wetter concentrate less interesting. Also the accommodation appears to be able to influence the feed intake, so that it is recommended to include such data in the memory.

The atmospheric condition measuring means described above can then ensure an automatic adaptation of the order and/or amount, in dependence on the measured temperature, humidity, atmospheric pressure, wind speed and the like.

Like with human beings, the optimal feed intake of a cow may depend on the point of time of the day, and thus it is possible to distinguish for example breakfast, lunch and dinner. Also these data may be included in the memory. When a clock, which is not explicitly shown in the drawings but is implicitly present in the computer, indicates the point of time of the day and issues a corresponding time signal to the control device, the point of time of the day can automatically be taken into account. It has further been found that there exists per cow a season-dependent order of sorts of feed offered for an optimal intake, which can automatically be taken into account by means of the clock.

Besides, the lactation period of the cow, the condition score of the cow, the point of time in the course of setting dry, the eating rate (from which the preference, respectively taste of the animal can be deduced), and the milk yield, the amount of energy and/or protein and/or fat and/or minerals and/or amino acids, and the like present in the milk produced by a cow appear to be suitable for being used as data in the memory for controlling the order of supply of the sorts of feed and/or amounts per sort of feed.

Such data, analogous to what has been described above in relation to adding liquid, can be inputted into the computer by means of the keyboard or another comparable inputting device for inputting data into the memory. Such data can also automatically be generated by the control device itself, by providing variation in the order and/or the amounts to be offered and by determining the feed intake resulting therefrom, respectively the economic result, and by automatically varying the offered feed in dependence on the result. This feed-back can also take a developing animal into account.

Because a number of data can be used by the control device for generating the control signal, there can also be provided a priority algorithm, as a result of which, on determining the order of sorts of feed to be offered, one data (for example air humidity) is given priority over another data (such as eating rate) when generating the control signal. Moreover, weight factors can be allotted to the various data, so that it is possible to take several data into account simultaneously. Such programs and algorithms are known per se to the person skilled in the art.

Because the number of possible combinations between data per cow is extremely large, for the sake of simplicity of the description it is impossible to describe the possible combinations. With the aid of the above-mentioned information, it is possible for a person skilled in the art to obtain the desired control and orders of sorts of feed to be offered by means of simple trial and error tests. The invention is further described with reference to a feed trough, but it will be obvious that the invention can also be applied to other embodiments of feeding parlours.

## Claims

1. A device for automatically supplying at least two sorts of feed to animals, such as cows, said device being provided with a number of hoppers, each for containing a stock of a particular sort of feed, and with a feeding parlour accessible to an animal, **characterized in that** the device is provided with a control device, said control device generating a control signal for controlling the device in such a way that, seen in time, at least one sort of feed is supplied to the feeding parlour at least substantially separately from the other sorts of feed, in order that substantially the at least one sort of feed is not present in the feeding parlour simultaneously with the other sorts of feed.

2. A device as claimed in claim 1, **characterized in that** the control signal controls the device in such a way that, seen in time, all sorts of feed are supplied to the feeding parlour separately from each other, in order that substantially none of the sorts of feed is present in the feeding parlour simultaneously with another sort of feed.

3. A device as claimed in claim 1 or 2, **characterized in that** the control signal controls the device in such a way that the order in which sorts of feed are supplied to the feeding parlour is arbitrary.

4. A device as claimed in claim 1 or 2, **characterized in that** the device is provided with an animal identification device for identifying an animal, **in that** the control device is provided with a computer having a memory, said memory containing per animal data in relation to sorts of feed to be supplied, the computer generating the control signal with the aid of data from the animal identification device and data from the memory, the control signal controlling the device in such a way that the order in which sorts of feed are supplied to the feeding parlour depends on said data.

5. A device as claimed in claim 4, **characterized in that** the data in the memory contain per animal data in relation to the feed intake in dependence on the environmental conditions.

6. A device as claimed in claim 5, **characterized in that** the device comprises atmospheric condition measuring means for measuring the atmospheric conditions and for issuing an atmosphere indication signal to the control device.

7. A device as claimed in any one of claims 4 through 6, **characterized in that** the data in the memory contain per animal data in relation to the feed intake in dependence on the point of time of the day.

8. A device as claimed in claim 7, **characterized in that** the device comprises a clock for measuring the point of time of the day and for issuing a time signal to the control device.

9. A device as claimed in any one of claims 4 through 8, **characterized in that** the data in the memory contain per animal data in relation to the feed intake in dependence on the period of the year.

10. A device as claimed in claim 9, **characterized in that** the device comprises a clock for measuring the period of the year and for issuing a year period signal to the control device.

11. A device as claimed in any one of claims 4 through 10, **characterized in that** the animal is constituted by a dairy animal, and **in that** the data in the memory contain per animal data in relation to the feed intake in dependence on the lactation period.

12. A device as claimed in any one of claims 4 through 11, **characterized in that** the data in the memory contain per animal data in relation to the feed intake in dependence on the condition score of the animal.

13. A device as claimed in claim 12, **characterized in that** the device comprises means for measuring the condition score of an animal and for issuing a condition score signal to the control device.

14. A device as claimed in any one of claims 4 through 13, **characterized in that** the animal is constituted by a dairy animal, and **in that** the data in the memory contain per animal data in relation to the feed intake pattern of the animal during setting dry.

15. A device as claimed in claim 14, **characterized in that** the device comprises a clock for measuring the momentary point of time in the course of setting dry the relevant animal, and for issuing a signal indicating the point of time of setting dry to the control signal.

16. A device as claimed in any one of claims 4 through 15, **characterized in that** the data in the memory contain per animal data in relation to the eating rate per sort of feed.

17. A device as claimed in claim 16, **characterized in that** the device is provided with means for determining per animal the eating rate per sort of feed, and for issuing an eating rate signal to the control device.

18. A device as claimed in any one of the preceding claims 4 through 17, the animal being constituted by a dairy animal, **characterized in that** the data in the memory contain per animal data in relation to the milk yield.

19. A device as claimed in any one of claims 4 through 18, **characterized in that** the data in the memory contain per animal data in relation to the amount of energy and/or protein and/or fat and/or minerals and/or amino acids to be offered, and **in that** the data in the memory contain per sort of feed data in relation to the amount of energy and/or protein and/or fat and/or minerals and/or amino acids per unit of weight.

20. A device as claimed in any one of claims 4 through 19, the animal being constituted by a dairy animal, **characterized in that** the data in the memory contain per animal milk data in relation to amounts of ingredients, such as fats, proteins, sugars, and the like, in the milk obtained from that animal.

21. A device as claimed in any one of claims 4 through 20, **characterized in that** the computer is provided with an inputting device for inputting data into the memory.

22. A device as claimed in any one of claims 4 through 21, **characterized in that** the control device is suitable for generating itself data for the memory.

23. A device as claimed in any one of claims 4 through 22, **characterized in that** the data are updated continuously.

24. A device as claimed in any one of the preceding claims, **characterized in that** the device is provided with an additive device for adding additives to the feeding parlour.

25. A device as claimed in any one of the preceding claims, **characterized in that** the device is provided with means for measuring the amount of a sort of feed consumed by an animal, and for issuing a consumed amount signal to the control device.

26. A device as claimed in claim 25, **characterized in that** the device is provided with a detection device for determining the amount of feed in the feeding parlour at a point of time after a supply of an amount of feed and for issuing a signal in dependence on the amount-determination result.

27. A device as claimed in claim 26, **characterized in that** the detection device comprises a weighing device for weighing the amount of feed in the feeding parlour.

28. A device as claimed in any one of claims 25 through 27, **characterized in that** at least two sorts of feed are supplied successively to the feeding parlour, the control device permitting the supply of a sort of feed after it has been established that a particular amount of the previous sort of feed, preferably the complete amount of the previous feed, has been consumed by the animal.

29. A device as claimed in any one of claims 25 through 28, **characterized in that** the control device is provided with a comparing device for comparing the consumed amount signal with a threshold value and for generating a comparison result signal, the control signal controlling the device in conjunction with the comparison result signal in such a way that the order and/or amount of sorts of feed possibly to be supplied further are/is adapted.

30. A device as claimed in any one of the preceding claims, **characterized in that** the feeding parlour comprises a feed trough capable of being closed by a closing means, the control device also being suitable for controlling the operation of the closing means.

31. A device as claimed in any one of the preceding claims, **characterised in that** the device is integrated in a milking box.

32. A device as claimed in any one of claims 1 through 30, **characterized in that** the device is constituted by a feeding column.

33. A device as claimed in any one of the preceding claims, **characterised in that** the device is provided with feed determining means for determining the sort of feed in a hopper.

34. A device as claimed in any one of the preceding claims, **characterized in that** the device is provided with a receptacle, conveying means comprising a first conveyor for conveying an amount of feed from the hopper to the receptacle and a second conveyor for conveying the amount of feed from the receptacle to the feeding parlour.

35. A device as claimed in claim 34, **characterized in that** the receptacle is provided with a weighing device for measuring the feed present in the receptacle.

36. A device as claimed in claim 34 or 35, **characterized in that** the receptacle has a bottom which is designed to be opened.

37. A device as claimed in claim 36, **characterized in that** there is provided a control device for controlling the opening of the bottom of the receptacle.

38. A device as claimed in any one of claims 34 through 37, **characterized in that** the second conveyor is constituted by a tube-shaped chute respectively a channel-shaped chute.

39. A method of automatically supplying at least two sorts of feed to animals, such as cows, **characterized in that** the method comprises the step of supplying the at least two sorts of feed at least substantially successively to the animals, in order that the at least one sort of feed is not present in the feeding parlour simultaneously with the other sorts of feed.

40. A method as claimed in claim 39, **characterized in that** the method comprises the step of supplying all sorts of feed at least substantially successively to the animals, in order that substantially none of the sorts of feed is present in the feeding parlour simultaneously with another sort of feed.

41. A method as claimed in claim 39 or 40, **characterized in that** the order in which sorts of feed are supplied is arbitrary.

42. A method as claimed in claim 39 or 40, **characterized in that** the method comprises the step of identifying an animal, the step of storing in a memory of a computer data in relation to sorts of feed to be supplied per animal, and the step of supplying sorts of feed at least substantially separately from each other to the animals in an order in dependence on said data.

43. A method as claimed in claim 42, **characterized in that** the method comprises the step of measuring the atmospheric conditions.

44. A method as claimed in any one of claims 39 through 43, **characterized in that** the method comprises the step of measuring the point of time of the day respectively measuring the date.

45. A method as claimed in any one of claims 39 through 44, **characterized in that** the method comprises the step of measuring the condition score of an animal.

46. A method as claimed in any one of claims 39 through 45, **characterized in that** the method comprises the step of determining per animal the eating rate per sort of feed.

47. A method as claimed in any one of the preceding claims 39 through 46, **characterized in that** the method comprises the step of measuring per animal milk values in relation to amounts of ingredients, such as fats, proteins, sugars, and the like in the milk obtained from that animal.

48. A method as claimed in any one of claims 39 through 47, **characterized in that** the method comprises the step of measuring the amount of a sort of feed consumed by an animal.

49. A method as claimed in claim 48, **characterized in that** the method comprises the step of weighing the amount of feed supplied to the animals.

50. A method as claimed in any one of claims 39 through 49, **characterized in that** the method comprises the step of supplying a next sort of feed when a particular amount of the previous sort of feed has been consumed by an animal, preferably when the previous sort of feed has completely been consumed by the animal.

## Patentansprüche

1. Vorrichtung zum automatischen Zuführen von mindestens zwei Futtersorten zu Tieren, wie z. B. Kühen, wobei die Vorrichtung mit einer Anzahl von Vorratsbehältern versehen ist, die jeweils einen Vorrat einer bestimmten Futtersorte enthalten, sowie mit einem Fütterungsstand, zu dem ein Tier Zutritt hat,
**dadurch gekennzeichnet, daß** die Vorrichtung mit einer Steuervorrichtung versehen ist, wobei die Steuervorrichtung ein Steuersignal erzeugt, um die Vorrichtung derart zu steuern, daß zeitlich gesehen mindestens eine Futtersorte dem Fütterungsstand zumindest im wesentlichen getrennt von den anderen Futtersorten zugeführt wird, damit im wesentlichen die mindestens eine Futtersorte nicht gleichzeitig mit den anderen Futtersorten in dem Fütterungsstand vorhanden ist.

2. Vorrichtung nach Anspruch 1,
**dadurch gekennzeichnet, daß** das Steuersignal die Vorrichtung derart steuert, daß zeitlich gesehen alle Futtersorten dem Fütterungsstand getrennt voneinander zugeführt werden, damit im wesentlichen keine der Futtersorten gleichzeitig mit einer anderen Futtersorte in dem Fütterungsstand vorhanden ist.

3. Vorrichtung nach Anspruch 1 oder 2,
**dadurch gekennzeichnet, daß** das Steuersignal die Vorrichtung derart steuert, daß die Reihenfolge, in der Futtersorten dem Fütterungsstand zugeführt werden, beliebig ist.

4. Vorrichtung nach Anspruch 1 oder 2,
**dadurch gekennzeichnet, daß** die Vorrichtung mit einer Tieridentifikationsvorrichtung zum Identifizieren eines Tieres versehen ist, daß die Steuervorrichtung einen Computer mit einem Speicher aufweist, wobei der Speicher für jedes Tier Daten bezüglich zuzuführender Futtersorten enthält, wobei der Computer das Steuersignal mit Hilfe von Daten von der Tieridentifikationsvorrichtung und Daten aus dem Speicher erzeugt, wobei das Steuersignal die Vorrichtung derart steuert, daß die Reihenfolge, in der dem Fütterungsstand Futtersorten zugeführt werden, von diesen Daten abhängt.

5. Vorrichtung nach Anspruch 4,
**dadurch gekennzeichnet, daß** die Daten in dem Speicher für jedes Tier Daten bezüglich der Futteraufnahme in Abhängigkeit von den Gegebenheiten in der Umgebung enthalten.

6. Vorrichtung nach Anspruch 5,
**dadurch gekennzeichnet, daß** die Vorrichtung eine Vorrichtung zum Messen der atmosphärischen Bedingungen umfaßt, um die atmosphärischen Bedingungen zu messen und ein Atmosphären-Anzeigesignal an die Steuervorrichtung zu geben.

7. Vorrichtung nach einem der Ansprüche 4 bis 6,
**dadurch gekennzeichnet, daß** die Daten in dem Speicher für jedes Tier Daten bezüglich der Futteraufnahme in Abhängigkeit von dem Zeitpunkt des Tages enthalten.

8. Vorrichtung nach Anspruch 7,
**dadurch gekennzeichnet, daß** die Vorrichtung eine Uhr zum Messen des Zeitpunktes des Tages und zum Ausgeben eines Zeitsignals an die Steuervorrichtung umfaßt.

9. Vorrichtung nach einem der Ansprüche 4 bis 8,
**dadurch gekennzeichnet, daß** die Daten in dem Speicher für jedes Tier Daten bezüglich der Futteraufnahme in Abhängigkeit von der Jahreszeit enthalten.

10. Vorrichtung nach Anspruch 9,
**dadurch gekennzeichnet, daß** die Vorrichtung eine Uhr zum Ermitteln der Jahreszeit und zum Ausgeben eines Jahreszeitensignals an die Steuervorrichtung umfaßt.

11. Vorrichtung nach einem der Ansprüche 4 bis 10,
**dadurch gekennzeichnet, daß** das Tier ein milchgebendes Tier ist, und daß die Daten in dem Speicher für jedes Tier Daten bezüglich der Futteraufnahme in Abhängigkeit von der Laktationsperiode enthalten.

12. Vorrichtung nach einem der Ansprüche 4 bis 11,
**dadurch gekennzeichnet, daß** die Daten in dem Speicher für jedes Tier Daten bezüglich der Futteraufnahme in Abhängigkeit vom Körperkonditionsindex des Tieres enthalten.

13. Vorrichtung nach Anspruch 12,
**dadurch gekennzeichnet, daß** die Vorrichtung eine Vorrichtung zum Messen des Körperkonditionsindexes eines Tieres und zum Ausgeben eines Körperkonditionsindex-Signals an die Steuervorrichtung umfaßt.

14. Vorrichtung nach einem der Ansprüche 4 bis 13,
**dadurch gekennzeichnet, daß** das Tier ein milchgebendes Tier ist, und daß die Daten in dem Speicher für jedes Tier Daten bezüglich des Futteraufnahmemusters des Tieres während des Trockenstellens enthalten.

15. Vorrichtung nach Anspruch 14,
**dadurch gekennzeichnet, daß** die Vorrichtung eine Uhr umfaßt, um den momentanen Zeitpunkt während des Trockenstellens des betreffenden Tieres zu messen und ein den Zeitpunkt des Trockenstellens anzeigendes Signal an das Steuersignal zu geben.

16. Vorrichtung nach einem der Ansprüche 4 bis 15,
**dadurch gekennzeichnet, daß** die Daten in dem Speicher für jedes Tier Daten bezüglich der Freßgeschwindigkeit pro Futtersorte enthalten.

17. Vorrichtung nach Anspruch 16,
**dadurch gekennzeichnet, daß** die Vorrichtung mit einer Vorrichtung versehen ist, um für jedes Tier die Freßgeschwindigkeit pro Futtersorte zu ermitteln und ein Freßgeschwindigkeitssignal an die Steuervorrichtung zu geben.

18. Vorrichtung nach einem der vorhergehenden Ansprüche 4 bis 17, wobei das Tier durch ein milchgebendes Tier gebildet ist,
**dadurch gekennzeichnet, daß** die Daten in dem Speicher für jedes Tier Daten bezüglich der Milchleistung enthalten.

19. Vorrichtung nach einem der Ansprüche 4 bis 18,
**dadurch gekennzeichnet, daß** die Daten in dem Speicher für jedes Tier Daten bezüglich der anzubietenden Menge an Energie und/oder Protein und/oder Fett und/oder Mineralien und/oder Aminosäuren enthalten, und daß die Daten in dem Speicher für jede Futtersorte Daten bezüglich der Menge an Energie und/oder Protein und/oder Fett und/oder Mineralien und/oder Aminosäuren pro Gewichtseinheit enthalten.

20. Vorrichtung nach einem der Ansprüche 4 bis 19, wobei das Tier durch ein milchgebendes Tier gebildet ist,
**dadurch gekennzeichnet, daß** die Daten in dem Speicher für jedes Tier Melkdaten bezüglich der Mengen an Inhaltsstoffen, wie z. B. Fetten, Proteinen, Zuckern und dergleichen, in der von diesem Tier gewonnenen Milch enthalten.

21. Vorrichtung nach einem der Ansprüche 4 bis 20,
**dadurch gekennzeichnet, daß** der Computer mit einer Eingabevorrichtung zum Eingeben von Daten in den Speicher versehen ist.

22. Vorrichtung nach einem der Ansprüche 4 bis 21,
**dadurch gekennzeichnet, daß** die Steuervorrichtung geeignet ist, ihrerseits Daten für den Speicher zu erzeugen.

23. Vorrichtung nach einem der Ansprüche 4 bis 22,
**dadurch gekennzeichnet, daß** die Daten ständig aktualisiert werden.

24. Vorrichtung nach einem der vorhergehenden Ansprüche,
**dadurch gekennzeichnet, daß** die Vorrichtung mit einer Zusetzvorrichtung zum Zusetzen von Zusatzstoffen zu dem Fütterungsstand versehen ist.

25. Vorrichtung nach einem der vorhergehenden Ansprüche,
**dadurch gekennzeichnet, daß** die Vorrichtung mit einer Vorrichtung versehen ist, um die Menge einer von einem Tier verzehrten Futtersorte zu messen und ein Verzehrmengensignal an die Steuervorrichtung zu geben.

26. Vorrichtung nach Anspruch 25,
**dadurch gekennzeichnet, daß** die Vorrichtung mit einer Detektionsvorrichtung versehen ist, um die Futtermenge in dem Fütterungsstand zu einem Zeitpunkt nach einer Zufuhr einer Futtermenge zu ermitteln und in Abhängigkeit von dem Mengenermittlungsergebnis ein Signal zu geben.

27. Vorrichtung nach Anspruch 26,
**dadurch gekennzeichnet, daß** die Detektionsvorrichtung eine Wiegevorrichtung zum Wiegen der Futtermenge in dem Fütterungsstand umfaßt.

28. Vorrichtung nach einem der Ansprüche 25 bis 27,
**dadurch gekennzeichnet, daß** mindestens zwei Futtersorten dem Fütterungsstand nacheinander zugeführt werden, wobei die Steuervorrichtung die Zufuhr einer Futtersorte gestattet, nachdem festgestellt worden ist, daß eine bestimmte Menge der vorhergehenden Futtersorte, vorzugsweise die gesamte Menge der vorhergehenden Futtersorte, von dem Tier verzehrt worden ist.

29. Vorrichtung nach einem der Ansprüche 25 bis 28,
**dadurch gekennzeichnet, daß** die Steuervorrichtung mit einer Vergleichsvorrichtung versehen ist, um das Verzehrmengensignal mit einem Grenzwert zu vergleichen und ein Vergleichsergebnissignal zu erzeugen, wobei das Steuersignal die Vorrichtung in Verbindung mit dem Vergleichsergebnissignal derart steuert, daß die Reihenfolge und/oder die eventuell weiter zuzuführende Menge an Futtersorten angepaßt werden/wird.

30. Vorrichtung nach einem der vorhergehenden Ansprüche,
**dadurch gekennzeichnet, daß** der Fütterungsstand einen durch eine Schließvorrichtung verschließbaren Futtertrog umfaßt, wobei die Steuervorrichtung auch geeignet ist, den Betrieb der Schließvorrichtung zu steuern.

31. Vorrichtung nach einem der vorhergehenden Ansprüche,
**dadurch gekennzeichnet, daß** die Vorrichtung in eine Melkbox integriert ist.

32. Vorrichtung nach einem der Ansprüche 1 bis 30,
**dadurch gekennzeichnet, daß** die Vorrichtung durch eine Futtersäule gebildet ist.

33. Vorrichtung nach einem der vorhergehenden Ansprüche,
**dadurch gekennzeichnet, daß** die Vorrichtung mit einer Futterbestimmungsvorrichtung zum Bestimmen der Futtersorte in einem Vorratsbehälter versehen ist.

34. Vorrichtung nach einem der vorhergehenden Ansprüche,
**dadurch gekennzeichnet, daß** die Vorrichtung mit einem Behälter versehen ist, wobei eine Fördervorrichtung einen ersten Förderer zum Befördern einer Futtermenge von dem Vorratsbehälter zu dem Behälter und einen zweiten Förderer zum Befördern der Futtermenge von dem Behälter zum Fütterungsstand umfaßt.

35. Vorrichtung nach Anspruch 34,
**dadurch gekennzeichnet, daß** der Behälter mit einer Wiegevorrichtung zum Messen des in dem Behälter befindlichen Futters versehen ist.

36. Vorrichtung nach Anspruch 34 oder 35,
**dadurch gekennzeichnet, daß** der Behälter einen Boden hat, der geöffnet werden kann.

37. Vorrichtung nach Anspruch 36,
**dadurch gekennzeichnet, daß** eine Steuervorrichtung zum Steuern der Öffnung des Bodens des Behälters vorgesehen ist.

38. Vorrichtung nach einem der Ansprüche 34 bis 37,
**dadurch gekennzeichnet, daß** der zweite Förderer durch einen rohrförmigen Schacht bzw. einen kanalförmigen Schacht gebildet ist.

39. Verfahren zum automatischen Zuführen von mindestens zwei Futtersorten zu Tieren, wie z. B. Kühen,
**dadurch gekennzeichnet, daß** das Verfahren den Verfahrensschritt des Zuführens der mindestens zwei Futtersorten zumindest im wesentlichen nacheinander zu den Tieren umfaßt, damit die mindestens eine Futtersorte nicht gleichzeitig mit den anderen Futtersorten in dem Fütterungsstand vorhanden ist.

40. Verfahren nach Anspruch 39,
**dadurch gekennzeichnet, daß** das Verfahren den Verfahrensschritt des Zuführens aller Futtersorten zumindest im wesentlichen nacheinander zu den Tieren umfaßt, damit im wesentlichen keine der Futtersorten gleichzeitig mit einer anderen Futtersorte in dem Fütterungsstand vorhanden ist.

41. Verfahren nach Anspruch 39 oder 40,
**dadurch gekennzeichnet, daß** die Reihenfolge, in der die Futtersorten zugeführt werden, beliebig ist.

42. Verfahren nach Anspruch 39 oder 40,
**dadurch gekennzeichnet, daß** das Verfahren den Verfahrensschritt des Identifizierens eines Tieres, den Verfahrensschritt des Speicherns in einem Speicher von Computerdaten über jedem Tier zuzuführende Futtersorten und den Verfahrensschritt des Zuführens von Futtersorten zu den Tieren zumindest im wesentlichen getrennt voneinander in einer von den Daten abhängigen Reihenfolge umfaßt.

43. Verfahren nach Anspruch 42,
**dadurch gekennzeichnet, daß** das Verfahren den Verfahrensschritt des Messens der atmosphärischen Bedingungen umfaßt.

44. Verfahren nach einem der Ansprüche 39 bis 43,
**dadurch gekennzeichnet, daß** das Verfahren den Verfahrensschritt des Messens des Zeitpunktes des Tages bzw. des Messens des Datums umfaßt.

45. Verfahren nach einem der Ansprüche 39 bis 44,
**dadurch gekennzeichnet, daß** das Verfahren den Verfahrensschritt des Messens des Körperkonditionsindexes eines Tieres umfaßt.

46. Verfahren nach einem der Ansprüche 39 bis 45,
**dadurch gekennzeichnet, daß** das Verfahren den Verfahrensschritt des Ermittelns der Freßgeschwindigkeit pro Futtersorte für jedes Tier umfaßt.

47. Verfahren nach einem der vorhergehenden Ansprüche 39 bis 46,
**dadurch gekennzeichnet, daß** das Verfahren den Verfahrensschritt des Messens von Milchwerten für jedes Tier bezüglich der Mengen an Inhaltsstoffen, wie z. B. Fetten, Proteinen, Zuckern und dergleichen, in der von diesem Tier gewonnenen Milch umfaßt.

48. Verfahren nach einem der Ansprüche 39 bis 47,
**dadurch gekennzeichnet, daß** das Verfahren den Verfahrensschritt des Messens der Menge einer von einem Tier verzehrten Futtersorte umfaßt.

49. Verfahren nach Anspruch 48,
**dadurch gekennzeichnet, daß** das Verfahren den Verfahrensschritt des Wiegens der den Tieren zugeführten Futtermenge umfaßt.

50. Verfahren nach einem der Ansprüche 39 bis 49,
**dadurch gekennzeichnet, daß** das Verfahren den Verfahrensschritt des Zuführens einer weiteren Futtersorte umfaßt, wenn eine bestimmte Menge der vorhergehenden Futtersorte von einem Tier verzehrt worden ist, vorzugsweise wenn die vorhergehende Futtersorte vollständig von dem Tier verzehrt worden ist.

## Revendications

1. Dispositif de distribution automatique d'au moins deux sortes de nourriture à des animaux, tels que des vaches, ledit dispositif étant pourvu d'un certain nombre de trémies, chacune devant contenir une provision d'une sorte particulière de nourriture et d'une stalle d'alimentation accessible à un animal, **caractérisé en ce que** le dispositif est pourvu d'un dispositif de commande, ledit dispositif de commande générant un signal de commande pour commander le dispositif de telle sorte que, vu dans le temps, au moins une sorte de nourriture soit distribuée à la stalle d'alimentation au moins sensiblement séparément des autres sortes de nourriture, afin que sensiblement l'au moins une sorte de nourriture ne soit pas présente dans la stalle d'alimentation simultanément avec les autres sortes de nourriture.

2. Dispositif selon la revendication 1, **caractérisé en ce que** le signal de commande commande le dispositif de telle sorte que, vu dans le temps, toutes les sortes de nourriture soient distribuées à la stalle d'alimentation séparément les unes des autres, afin que sensiblement aucune des sortes de nourriture ne soit présente dans la stalle d'alimentation simultanément avec une autre sorte de nourriture.

3. Dispositif selon la revendication 1 ou 2, **caractérisé en ce que** le signal de commande commande le dispositif de telle sorte que l'ordre dans lequel les sortes de nourriture sont distribuées à la stalle d'alimentation soit arbitraire.

4. Dispositif selon la revendication 1 ou 2, **caractérisé en ce que** le dispositif est pourvu d'un dispositif d'identification d'animal pour identifier un animal, **en ce que** le dispositif de commande est pourvu d'un ordinateur ayant une mémoire, ladite mémoire contenant par animal des données en relation avec les sortes de nourriture devant être distribuées, l'ordinateur générant le signal de commande à l'aide des données provenant du dispositif d'identification de l'animal et des données provenant de la mémoire, le signal de commande commandant le dispositif de telle sorte que l'ordre dans lequel les sortes de nourriture sont distribuées à la stalle d'alimentation dépende desdites données.

5. Dispositif selon la revendication 4, **caractérisé en ce que** les données dans la mémoire contiennent par animal des données en relation avec la ration alimentaire dépendant des conditions de l'environnement.

6. Dispositif selon la revendication 5, **caractérisé en ce que** le dispositif comprend des moyens de mesure des conditions atmosphériques pour mesurer les conditions atmosphériques et d'émission d'un signal d'indication de l'atmosphère au dispositif de commande.

7. Dispositif selon l'une quelconque des revendications 4 à 6, **caractérisé en ce que** les données dans la mémoire contiennent par animal des données en relation avec la ration alimentaire dépendant du moment de la journée.

8. Dispositif selon la revendication 7, **caractérisé en ce que** le dispositif comprend une horloge pour mesurer le moment de la journée et pour émettre un signal horaire vers le dispositif de commande.

9. Dispositif selon l'une quelconque des revendications 4 à 8, **caractérisé en ce que** les données dans la mémoire contiennent par animal des données en relation avec la ration alimentaire dépendant de la période de l'année.

10. Dispositif selon la revendication 9, **caractérisé en ce que** le dispositif comprend une horloge pour mesurer la période de l'année et pour émettre un signal de période de l'année vers le dispositif de commande.

11. Dispositif selon l'une quelconque des revendications 4 à 10, **caractérisé en ce que** l'animal est un animal laitier, et **en ce que** les données dans la mémoire contiennent par animal des données en relation avec la ration alimentaire dépendant de la période de lactation.

12. Dispositif selon l'une quelconque des revendications 4 à 11, **caractérisé en ce que** les données dans la mémoire contiennent par animal des données en relation avec la ration alimentaire dépendant de l'indice de condition de l'animal.

13. Dispositif selon la revendication 12, **caractérisé en ce que** le dispositif comprend des moyens pour mesurer l'indice de condition d'un animal et pour émettre un signal d'indice de condition vers le dispositif de commande.

14. Dispositif selon l'une quelconque des revendications 4 à 13, **caractérisé en ce que** l'animal est un animal laitier et **en ce que** les données dans la mémoire contiennent par animal des données en relation avec le modèle de ration alimentaire de l'animal lors du tarissement.

15. Dispositif selon la revendication 14, **caractérisé en ce que** le dispositif comprend une horloge pour mesurer le moment provisoire au cours du tarissement de l'animal concerné, et pour émettre un signal indiquant le moment du tarissement vers le signal de commande.

16. Dispositif selon l'une quelconque des revendications 4 à 13, **caractérisé en ce que** les données dans la mémoire contiennent par animal des données en relation avec la vitesse d'ingestion des aliments par sorte de nourriture.

17. Dispositif selon la revendication 16, **caractérisé en ce que** le dispositif est pourvu de moyens pour déterminer par animal la vitesse d'ingestion des aliments par sorte de nourriture, et pour émettre un signal de vitesse d'ingestion des aliments vers le dispositif de commande.

18. Dispositif selon l'une quelconque des revendications précédentes 4 à 17, l'animal étant un animal laitier, **caractérisé en ce que** les données dans la mémoire contiennent par animal des données en relation avec la production de lait.

19. Dispositif selon l'une quelconque des revendications 4 à 18, **caractérisé en ce que** les données dans la mémoire contiennent par animal des données en relation avec la quantité d'énergie et/ou de protéine et/ou de graisse et/ou de minéraux et/ou d'acides aminés devant être donnée, et **en ce que** les données dans la mémoire contiennent par sorte de nourriture des données en relation avec la quantité d'énergie et/ou de protéine et/ou de graisse et/ou de minéraux et/ou d'acides aminés par unité de poids.

20. Dispositif selon l'une quelconque des revendications 4 à 19, l'animal étant un animal laitier, **caractérisé en ce que** les données dans la mémoire contiennent par animal des données sur le lait en relation avec les quantités d'ingrédients, tels que les graisses, les protéines, les sucres et similaire, dans le lait obtenu à partir de cet animal.

21. Dispositif selon l'une quelconque des revendications 4 à 20, **caractérisé en ce que** l'ordinateur est pourvu d'un dispositif d'entrée pour entrer des données dans la mémoire.

22. Dispositif selon l'une quelconque des revendications 4 à 21, **caractérisé en ce que** le dispositif de commande est apte à générer lui-même des données pour la mémoire.

23. Dispositif selon l'une quelconque des revendications 4 à 22, **caractérisé en ce que** les données sont mises à jour en continu.

24. Dispositif selon l'une quelconque des revendications précédentes, **caractérisé en ce que** le dispositif est pourvu d'un dispositif additif pour ajouter des additifs à la stalle d'alimentation.

25. Dispositif selon l'une quelconque des précédentes revendications, **caractérisé en ce que** le dispositif est pourvu de moyens pour mesurer la quantité d'une sorte de nourriture consommé par un animal et pour émettre un signal de quantité consommée vers le dispositif de commande.

26. Dispositif selon la revendication 25, **caractérisé en ce que** le dispositif est pourvu d'un dispositif de détection pour déterminer la quantité de nourriture dans la stalle d'alimentation à un moment après une distribution d'une quantité de nourriture et pour émettre un signal dépendant du résultat de détermination de quantité.

27. Dispositif selon la revendication 26, **caractérisé en ce que** le dispositif de détection comprend un dispositif de pesage pour peser la quantité de nourriture dans la stalle d'alimentation.

28. Dispositif selon l'une quelconque des revendications 25 à 27, **caractérisé en ce qu'**au moins deux sortes de nourriture sont distribuées successivement à la stalle d'alimentation, le dispositif de commande permettant la distribution d'une sorte de nourriture une fois qu'il a été établi qu'une quantité particulière de la sorte de nourriture précédente, de préférence la quantité totale du nourriture précédent, a été consommée par l'animal.

29. Dispositif selon l'une quelconque des revendications 25 à 28, **caractérisé en ce que** le dispositif de commande est pourvu d'un dispositif de comparaison pour comparer le signal de quantité consommée à une valeur de seuil et pour générer un signal de résultat de comparaison, le signal de commande commandant le dispositif conjointement avec le signal de résultat de comparaison de telle sorte que l'ordre et/ou la quantité de sortes de nourriture susceptibles d'être encore distribuée sont/est adapté (s).

30. Dispositif selon l'une quelconque des revendications précédentes, **caractérisé en ce que** la stalle d'alimentation comprend une auge pouvant être fermée à l'aide de moyens de fermeture, le dispositif de commande étant également apte à commander le fonctionnement des moyens de fermeture.

31. Dispositif selon l'une quelconque des revendications précédentes, **caractérisé en ce que** le dispositif est intégré dans un box de traite.

32. Dispositif selon l'une quelconque des revendications 1 à 30, **caractérisé en ce que** le dispositif est constitué d'une colonne d'alimentation.

33. Dispositif selon l'une quelconque des revendications précédentes, **caractérisé en ce que** le dispositif est pourvu de moyens de détermination de nourriture pour déterminer la sorte de nourriture dans une trémie.

34. Dispositif selon l'une quelconque des revendications précédentes, **caractérisé en ce que** le dispositif est pourvu d'un réceptacle, de moyens d'acheminement comprenant un premier convoyeur pour acheminer la quantité de nourriture de la trémie au réceptacle et un second convoyeur pour acheminer la quantité de nourriture du réceptacle à la stalle d'alimentation.

35. Dispositif selon la revendication 34, **caractérisé en ce que** le réceptacle est pourvu d'un dispositif de pesage pour mesurer le nourriture présent dans le réceptacle.

36. Dispositif selon la revendication 34 ou 35, **caractérisé en ce que** le réceptacle a un fond qui est conçu pour être ouvert.

37. Dispositif selon la revendication 36, **caractérisé en ce qu'**il est pourvu d'un dispositif de commande pour commander l'ouverture du fond du réceptacle.

38. Dispositif selon l'une quelconque des revendications 34 à 37, **caractérisé en ce que** le second convoyeur est constitué d'une goulotte en forme de tube, respectivement une goulotte en forme de canal.

39. Procédé de distribution automatique d'au moins deux sortes de nourriture à des animaux, tels que des vaches, **caractérisé en ce que** le procédé comprend l'étape consistant à distribuer les au moins deux sortes de nourriture au moins sensiblement successivement aux animaux, de sorte que l'au moins une sorte de nourriture ne soit pas présente dans la stalle d'alimentation simultanément avec les autres sortes de nourriture.

40. Procédé selon la revendication 39, **caractérisé en ce que** le procédé comprend l'étape consistant à distribuer toutes sortes de nourriture au moins sensiblement successivement aux animaux, de sorte que sensiblement aucune des sortes de nourriture ne soit présente dans la stalle d'alimentation simultanément avec une autre sorte de nourriture.

41. Procédé selon la revendication 39 ou 40, **caractérisé en ce que** l'ordre dans lequel les sortes de nourriture sont distribuées est arbitraire.

42. Procédé selon la revendication 39 ou 40, **caractérisé en ce que** le procédé comprend l'étape d'identification d'un animal, l'étape consistant à stocker dans une mémoire d'un ordinateur des données en relation avec des sortes de nourriture devant être distribuées par animal, et l'étape consistant à distribuer des sortes de nourriture au moins sensiblement séparément les unes des autres aux animaux dans un ordre dépendant desdites données.

43. Procédé selon la revendication 42, **caractérisé en ce que** le procédé comprend l'étape de mesure des conditions atmosphériques.

44. Procédé selon l'une quelconque des revendications 39 à 43, **caractérisé en ce que** le procédé comprend l'étape consistant à mesurer le moment de la journée mesurant respectivement la date.

45. Procédé selon l'une quelconque des revendications 39 à 44, **caractérisé en ce que** le procédé comprend l'étape consistant à mesurer l'indice de condition d'un animal.

46. Procédé selon l'une quelconque des revendications 39 à 45, **caractérisé en ce que** le procédé comprend l'étape consistant à déterminer par animal la vitesse d'ingestion des aliments par sorte de nourriture.

47. Procédé selon l'une quelconque des revendications 39 à 46, **caractérisé en ce que** le procédé comprend l'étape consistant à mesurer par animal les valeurs de lait en relation avec des quantités d'ingrédients, tels que des graisses, des protéines, des sucres et similaire dans le lait obtenu à partir de cet animal.

48. Procédé selon l'une quelconque des revendications 39 à 47, **caractérisé en ce que** le procédé comprend l'étape consistant à mesurer la quantité d'une sorte de nourriture consommée par un animal.

49. Procédé selon la revendication 48, **caractérisé en ce que** le procédé comprend l'étape consistant à peser la quantité de nourriture distribuée aux animaux.

50. Procédé selon l'une quelconque des revendications 39 à 49, **caractérisé en ce que** le procédé comprend l'étape consistant à distribuer une autre sorte de nourriture lorsqu'une quantité particulière de la précédente sorte de nourriture a été consommée par un animal, de préférence lorsque la précédente sorte de nourriture a été complètement consommée par l'animal.
